(19) Europäisches Patentamt
European Patent Office
Office européen des brevets

(11) Veröffentlichungsnummer : **0 158 748**
**B1**

(12) # EUROPÄISCHE PATENTSCHRIFT

(45) Veröffentlichungstag der Patentschrift : **02.03.88**

(51) Int. Cl.⁴ : **B 01 D 53/34**, C 01 B 17/04

(21) Anmeldenummer : **84201936.6**

(22) Anmeldetag : **24.12.84**

(54) **Verfahren zum Entfernen von Schwefeloxiden aus Rauchgas mit regenerierbarer Aktivkohle.**

(30) Priorität : **03.03.84 DE 3407884**

(43) Veröffentlichungstag der Anmeldung : **23.10.85 Patentblatt 85/43**

(45) Bekanntmachung des Hinweises auf die Patenterteilung : **02.03.88 Patentblatt 88/09**

(84) Benannte Vertragsstaaten : **BE DE FR IT NL**

(56) Entgegenhaltungen : **BE-A- 737 234**

(73) Patentinhaber : **LABORATORIUM FÜR ADSORPTIONSTECHNIK GMBH**
**Gwinnerstrasse 27/33**
**D-6000 Frankfurt am Main (DE)**

(72) Erfinder : **Storp, Klaus, DR.**
**Fritz-Schubert-Ring 46**
**D-6000 Frankfurt am Main 60 (DE)**
Erfinder : **Wirth, Johann, Dr**
**Eifelweg 7**
**D-6868 Bad Vilbel (DE)**
Erfinder : **Rittinger, Günther**
**Lessingstrasse 73**
**D-6367 Karben 6 (DE)**
Erfinder : **Hohmann, Volker**
**Frankenstrasse 36**
**D-6457 Maintal 4 (DE)**

(74) Vertreter : **Rieger, Harald, Dr.**
**Reuterweg 14**
**D-6000 Frankfurt am Main (DE)**

**EP 0 158 748 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft ein Verfahren zum Entfernen von Schwefeldioxid und Schwefeltrioxid aus Sauerstoff und Wasserdampf enthaltendem Rauchgas, das man in einer Adsorptionszone über regenerierbare Aktivkohle leitet, auf der die Schwefeloxide als Schwefelsäure abgeschieden werden, und Regeneration der beladenen Aktivkohle, die mit schwefelhaltigem Reduktionsgas ($H_2S$ und/oder $CS_2$ und/oder COS) behandelt wird, wobei Elementarschwefel entsteht, aus dem mit Wasserstoff oder Kohlenwasserstoffen das schwefelhaltige Reduktionsgas gebildet und zur Regeneration verwandt wird.

Ähnliche Verfahren sind in der DE-C-19 66 711 und der DE-A-19 45 090 beschrieben. Die mit Schwefelsäure beladene Aktivkohle wird hierbei so mit Schwefelwasserstoff behandelt, daß das gasförmige $SO_2$ entsteht, welches ausgespült und einer Weiterverarbeitung zugeführt wird.

Der Erfindung liegt die Aufgabe zugrunde, in der Adsorptionszone bei möglichst kurzer Verweilzeit des Rauchgases eine hohe Beladung der Aktivkohle an Schwefelsäure zu erreichen. Gleichzeitig soll die Regenerierung der beladenen Aktivkohle auf einfache und kostengünstige Weise erfolgen können, wobei ein gut verwertbares, insbesondere verkäufliches und lagerfähiges Produkt erhalten werden soll. Beim eingangs genannten Verfahren geschieht dies erfindungsgemäß dadurch, daß man das Rauchgas mit einer Temperatur von etwa 50 bis 80 °C und einer relativen Wasserdampfsättigung von 35 bis 90 % in die Adsorptionszone leitet, zur Regeneration der beladenen Aktivkohle in einer ersten Reduktionszone mit im Kreislauf geführtem schwefelhaltigem Reduktionsgas bei Temperaturen von 120 bis 180 °C die entstandene $H_2SO_4$ vollständig in Elementarschwefel umwandelt, in einer Desorptionszone bei Temperaturen im Bereich von 300 bis 500 °C etwa 20 bis 30 % der Elementarschwefel-Beladung mit Inertgas entfernt und den entfernten Schwefel gewinnt, anschließend in einer zweiten Reduktionszone die restliche Elementarschwefel-Beladung der Aktivkohle mit Wasserstoff oder Kohlenwasserstoffen bei Temperaturen im Bereich von 400 bis 550 °C zum schwefelhaltigen Reduktionsgas umsetzt und dieses Reduktionsgas der ersten Reduktionszone zuführt, und daß man die Aktivkohle kühlt und in der Adsorptionszone wieder verwendet.

Diese Arbeitsweise bringt gegenüber den bekannten Verfahren wesentliche Verbesserungen mit sich. Zunächst gelingt es durch die ziemlich niedrigen Temperaturen des Rauchgases und seine nicht vollständige Sättigung mit Wasserdampf, in der Adsorptionszone bei Verweilzeiten von nur wenigen Sekunden Schwefelsäure-Beladungen bis zu etwa 50 Gew.%, bezogen auf das Gewicht der trockenen, unbeladenen Aktivkohle, zu erreichen. Üblicherweise liegen die Schwefelsäure-Beladungen der Aktivkohle bei Verweilzeiten von etwa 1 bis 3 sec. im Bereich von 20 bis 50 Gew.%. Durch diese hohe Wirksamkeit der Aktivkohle kann ihre Menge in der Adsorptionszone niedrig gehalten werden, was zu Kostensenkungen sowohl beim Kohleeinsatz wie auch auf der Anlagenseite führt.

Die hohe Beladung hat außerdem den Vorteil, daß die Aktivkohle weniger oft zur Regeneration gefördert werden muß, wodurch die mechanische Beanspruchung verringert wird. Leitet man das Rauchgas unter den Bedingungen anderer bekannter Verfahren durch die Aktivkohle, nämlich bei etwa 130 bis 160 °C, setzt sich das $SO_2$ infolge der geringen relativen Feuchtigkeit viel langsamer zu Schwefelsäure um, und man erhält nur Schwefelsäurebeladungen von etwa 1 bis 3 Gew.%, bezogen auf das Gewicht der Kohle. Unter den Bedingungen des erfindungsgemäßen Verfahrens erfährt das Rauchgas durch die Reaktionswärme noch eine Temperaturerhöhung von ca. 15 bis 20 °C, so daß im allgemeinen eine Wiederaufheizung vor dem Einleiten in den Kamin nicht erforderlich ist.

Zum Regenerieren wird die beladene Aktivkohle zunächst einer ersten Reduktionszone zugeführt, wo $H_2SO_4$ bei Temperaturen von 120 bis 180 °C vollständig in Elementarschwefel umgewandelt wird. Es wird hierbei bewußt vermieden, daneben auch noch $SO_2$ zu erzeugen, da hierdurch ein Weiterbehandlungsschritt nötig würde. Der Elementarschwefel, mit dem die Aktivkohle am Ausgang der ersten Reduktionszone beladen ist, kann mit einem heißen Inertgas desorbiert und durch Kühlung gewonnen werden, wobei ein leicht handhabbares Produkt entsteht. Der Schwefel läßt sich nämlich ohne großen Aufwand lagern, er ist nicht aggressiv, nimmt nur ein relativ kleines Volumen ein und stellt zumeist ein verkaufsfähiges Produkt dar.

In der zweiten Reduktionszone erzeugt man das in der ersten Reduktionszone notwendige schwefelhaltige Reduktionsgas, z. B. Schwefelwasserstoff, und entfernt dabei die Schwefelbeladung der Aktivkohle vollständig. Nach Durchlaufen einer Kühlzone kann die regenerierte Aktivkohle dann wieder der Adsorptionszone zum Reinigen von Rauchgas zugeführt werden.

Für das Verfahren kann eine hochwertige Aktivkohle verwendet werden, da die Kohle bei den chemischen Umsetzungen, die beim Regenerieren erfolgen, nicht verbraucht wird, sondern als Katalysator wirkt. Es empfiehlt sich deshalb der Einsatz einer Aktivkohle mit einer BET-Oberfläche von mindestens 1 000 $m^2/g$, einem Mikroporenvolumen von 0,5 bis 0,7 $cm^3/g$ und einem Makroporenvolumen von 0,45 bis 0,60 $cm^3/g$. Eine besonders geeignete Aktivkohle weist einen Hydrophobie-Quotienten von 1,5 bis 2,5 auf. Der Hydrophobie-Quotient errechnet sich aus QB : QW, wobei QB die Benetzungswärme für Benzol und QW die Benetzungswärme für Wasser bezüglich der verwendeten Aktivkohle ist. Die Ermittlung der Benetzungswärme geschieht in folgender Weise.

Man pipettiert 100 $cm^3$ Benzol bzw. Wasser in ein Dewar-Gefäß, das ein Beckmann-Thermometer enthält, verschließt es mit einem Gummistopfen und läßt dies einige Stunden zum Temperaturausgleich

stehen. Gleichzeitig wiegt man eine bestimmte Menge pulverisierter Aktivkohle ein (3 g bei Benzol, 10 g bei Wasser), die zuvor bei 120 °C getrocknet wurde. Die Kohle soll ebenfalls einige Zeit verschlossen bis zum Temperaturausgleich im Reagenzglas bleiben. Ist die Temperatur des Benzols oder Wassers während 3 min. konstant, so trägt man die Kohle rasch ein und mißt den Temperaturanstieg unter ständigem leichtem Schütteln des Gefäßes im Abstand von jeweils 30 sec. Der der Berechnung zugrunde gelegte Temperaturanstieg $\Delta T$ wird aus dem Maximum der Temperatur-Zeitkurve ermittelt.

Die Benetzungswärme berechnet sich wie folgt :

$$q = (m_L \cdot C_L + m_K \cdot C_K) \cdot \Delta T$$

Darin bedeuten :

$q$ = Benetzungswärme bezogen auf Einwaage

$m_L$ = die Masse des eingesetzten Benzols bzw. Wassers (in g)

$m_K$ = das Gewicht der Kohle (in g)

$c_L$ = die spezifische Wärme des Benzols bzw. Wassers (in J/g)

$c_K$ = die spezifische Wärme der Kohle (etwa 0,8 J/g).

Dividiert man noch durch die Einwaage, so erhält man die Benetzungswärme Q in J/g.

Weitere Charakteristika bevorzugter Aktivkohlen sind folgende :

Benzolbeladung bei 20 °C und einer relativen Sättigung von 90 %: 44 bis 52 Gew.%, sowie bei relativer Sättigung von 10 %: 38 bis 44 Gew.%. Die Rütteldichte der Aktivkohlen kann im Bereich von etwa 350 bis 400 g/l liegen. Grundsätzlich ist körnige oder geformte Aktivkohle geeignet, wobei man die Korngröße je nachdem, ob man mit Festbett, Wirbelbett oder z. B. mit Rutschbett (vgl. Zeichnung) arbeiten will, entsprechend wählt. Diese Auswahl wird vor allem auch den zulässigen Druckverlust bei der Rauchgasentschwefelung berücksichtigen. Für Festbettund Rutschbettadsorber hat sich eine zylindrische Formkohle mit etwa 4 mm Durchmesser bewährt.

Eine Ausgestaltung der Verfahrensführung ist in der Zeichnung dargestellt.

Heißes Rauchgas, z. B. aus einem Kraftwerk, wird in der Leitung 1 herangeführt. Das Rauchgas weist üblicherweise Temperaturen im Bereich von etwa 130 bis 160 °C auf, es enthält Wasserdampf und mehr Sauerstoff, als stöchiometrisch zum Umwandeln von $SO_2$ mit $H_2O$ in $H_2SO_4$ nötig ist. Unter Eindüsen von Wasser aus der Leitung 2 erfolgt in einem Einspritzkühler 3 die Kühlung des Rauchgases auf Temperaturen im Bereich von etwa 50 bis 80 °C, vorzugsweise 60 bis 70 °C. Dabei wird gleichzeitig auch die relative Wasserdampfsättigung des Rauchgases auf 35 bis 90 % und vorzugsweise 45 bis 60 % eingestellt. Dieses relativ kalte und trockene Rauchgas wird in der Leitung 4 dem Adsorber 5 zugeführt. Der Adsorber enthält zwischen zwei gasdurchlässigen, jalousieartigen Wänden 5a und 5b eine sich langsam nach unten bewegende Schicht 6 körniger Aktivkohle. Frische Aktivkohle kommt aus dem Zulauf 8. Die Verweilzeit des Gases in der Aktivkohleschicht 6, die quer durchströmt wird, beträgt etwa 1 bis 3 sec. Abweichend von der Zeichnung kann der Adsorber 5 auch z. B. als Wirbelbett oder horizontales Wanderbett ausgestaltet sein.

Auf der Oberfläche der Aktivkohle wird $SO_2$ zusammen mit dem im Rauchgas ausreichend vorhandenen Sauerstoff und dem Wasserdampf unter der katalytischen Wirkung der Kohle zu Schwefelsäure umgewandelt, die auf der Kohle adsorbiert wird. Auch $SO_3$ wird in Form von $H_2SO_4$ auf der Kohle gebunden. Entschwefeltes Rauchgas mit einem $SO_2$-Gehalt von höchstens etwa 100 bis 150 mg/m$^3$ verläßt den Adsorber 5 durch den Kamin 9.

Beladene Aktivkohle wird vom Auslaß 7 über eine Zellenradschleuse 10 auf dem Transportweg 7 einem Regenerierturm 11 zugeführt. Die Aktivkohle ist dabei mit etwa 35 bis 40 Gew.% $H_2SO_4$ (bezogen auf das Gewicht der unbeladenen Kohle) beladen. Läßt man die Aktivkohle rascher durch die Schicht 6 laufen und begnügt sich mit einer $H_2SO_4$-Beladung von nur etwa 20 Gew.%, ist das Rauchgas im Kamin 9 völlig frei von $SO_2$. Im Turm 11 durchläuft die Aktivkohle im wesentlichen in Form einer Schüttung 11a verschiedene Behandlungszonen. Zunächst erfolgt in der ersten Reduktionszone 12 die vollständige Umwandlung der $H_2SO_4$-Beladung der Aktivkohle mit schwefelhaltigem Reduktionsgas, z. B. Schwefelwasserstoff, zu Elementarschwefel etwa nach der Umsetzungsgleichung

$$H_2SO_4 + 3H_2S \rightarrow 4S + 4\ H_2O.$$

Zu diesem Zweck leitet man $H_2S$ mit Temperaturen von etwa 400 bis 550 °C in der Leitung 15 in eine Ringleitung 16, der man auch Kreislaufgas aus der Leitung 17 zuführt. Durch Gasverteilungsdüsen 18 leitet man das im wesentlichen aus $H_2S$ bestehende Gas nach oben durch die Aktivkohleschüttung, wobei in der ersten Reduktionszone Temperaturen im Bereich von 120 bis 180 °C aufrechterhalten werden. Das in der Leitung 19 abgezogene Gas wird zunächst dem Kühler 20 zugeführt, der den mitgeführten Wasserdampf kondensiert und das Wasser in der Leitung 21 ausschleust. Das Kreislaufgebläse 22 führt das gekühlte Gas in der Leitung 17 zurück, das dann in der Ringleitung 16 mit heißem $H_2S$ aus der Leitung 15 vermischt wird. Am unteren Ende der ersten Reduktionszone 12 ist die Aktivkohle nur noch mit Elementarschwefel beladen.

Etwa 20 bis 30 % der Elementarschwefel-Beladung der Aktivkohle werden in der Desorptionszone 24 bei Temperaturen im Bereich von 300 bis 500 °C mit Inertgas entfernt. Dieses Inertgas, bei dem es sich

zum Beispiel um Stickstoff handeln kann, wird in der Leitung 25 herangeführt, im Gaserhitzer 26 auf 400 bis 450 °C erhitzt und über eine Ringleitung 27 mit Verteilerdüsen 28 in die Desorptionszone 24 gedrückt. Über Abzugsschächte 29, die in eine Sammelleitung 30 münden, tritt das schwefelhaltige Inertgas wieder aus und gelangt in einen Kühler 31. Dort wird der Schwefel kondensiert und in der Leitung 32 abgezogen. Über das Kreislaufgebläse 33 wird das Inertgas zurückgeführt.

Von den in der ersten Reduktionszone 12 aus einem $H_2SO_4$ Molekül nach der Gleichung

$$H_2SO_4 + 3H_2S \rightarrow 4S + 4H_2O$$

entstandenen vier Schwefelatomen wird ein S-Atom, also ungefähr ein Viertel der Schwefel-Beladung, in der Desorptionszone 24 entfernt. Die restliche Schwefel-Beladung der Aktivkohle wird anschließend in der zweiten Reduktionszone 35 vollständig desorbiert und in das schwefelhaltige Reduktionsgas, z. B. in $H_2S$, umgewandelt. Zu diesem Zweck leitet man heißen Wasserstoff durch die Leitung 36 in die Ringleitung 37 und über Düsen 38 durch die schwefelbeladene Aktivkohle. In der zweiten Reduktionszone 35 werden Temperaturen im Bereich von 400 bis 550 °C aufrechterhalten, wobei aus S + $H_2$ Schwefelwasserstoff entsteht. Leitet man zur Erzeugung des schwefelhaltigen Reduktionsgases Kohlenwasserstoffe (z. B. $CH_4$) durch die Leitung 36 in die Reduktionszone 35, so setzen sie sich mit dem Schwefel und ggf. Wasserdampf etwa nach den Gleichungen

$$4S + CH_4 \rightarrow 2H_2S + CS_2$$

oder

$$4S + CH_4 + H_2O \rightarrow COS + 3H_2S$$

um. $CS_2$ und COS sind ebenfalls in der Lage, mit $H_2SO_4$ in der ersten Reduktionszone Elementarschwefel zu bilden, und zwar nach der Formel

$$2H_2SO_4 + 3CS_2 \rightarrow 6S + 2H_2O + 3CO_2$$

bzw

$$H_2SO_4 + 3COS \rightarrow 4S + H_2O + 3CO_2$$

Das hierbei entstehende $CO_2$ ist leicht abzutrennen und führt nicht zur Umweltbelastung. Das in der zweiten Reduktionszone 35 gebildete schwefelhaltige Reduktionsgas, z. B. $H_2S$, wird über die Abzugsschächte 39, die Sammelleitung 40 und die Leitung 15 zur ersten Reduktionszone 12 geleitet.

Am unteren Ende der zweiten Reduktionszone 35 ist die Aktivkohle von ihrer Beladung wieder befreit und wird nur noch durch die Kühlzone 41 geführt. Die Kühlzone weist die Kühlgasleitungen 42 und 43, den Kühler 44, das Kreislaufgebläse 45, die Ringleitung 46 mit Verteilerdüsen 47 sowie die Gasabzugsschächte 48 auf. Als Kühlgas kann z. B. Stickstoff oder auch der anschließend der zweiten Reduktionszone 35 aufgegebene Wasserstoff verwendet werden. Mit Temperaturen von etwa 40 bis 70 °C verläßt die gekühlte Aktivkohle den Regenerierturm 11 über die Zellenradschleuse 50 und wird über den Transportweg 51 in den Zulauf 8 zurückgeführt.

## Beispiel

Das Beispiel, dessen Daten teilweise berechnet sind, basiert auf der Entschwefelung einer Rauchgasmenge von $1{,}9 \cdot 10^6$ $Nm^3$, wie sie ein kohlegefeuertes Großkraftwerk mit 600 MW stündlich etwa erzeugt. Das Rauchgas enthält 0,15 Vol.% $SO_2$, was 8 350 kg/h Schwefel entspricht. Die weitere Erläuterung des Beispiels erfolgt mit Hilfe der in der Zeichnung dargestellten Verfahrensführung.

Durch den Zulauf 8 werden der Adsorptionszone 5 pro Stunde 40 000 kg Aktivkohle zugeführt. Die gleiche Menge Aktivkohle wird über die Zellenradschleuse 10 in den Regenerierturm 11 geleitet zusammen mit der Beladung von 11 500 kg/h $H_2SO_4$ und 11 500 kg/h Wasser. Durch die Leitung 15 werden pro Stunde 8 100 $Nm^3$ $H_2S$ herangeführt, die Temperatur in der ersten Reduktionszone liegt bei etwa 150 °C, und das Kreislaufgas in der Leitung 19 weist eine Temperatur von 110 °C auf. Im Kühler 20, den das Gas mit einer Temperatur von etwa 80 °C verläßt, werden pro Stunde 20 500 kg Wasser durch die Leitung 21 abgeführt. In der Desorptionszone 24 erfolgt die Desorption von einem Viertel der Schwefelbeladung der Aktivkohle etwa bei einer Temperatur von 450 °C mit Stickstoff als Trägergas, das Kreislaufgas in der Leitung 30 weist eine Temperatur von 350 °C auf und wird im Kühler 31 auf 130 °C gekühlt. Dabei fallen pro Stunde 3 850 kg Schwefel in der Leitung 32 an. Nach der Erhitzung im Wärmeaustauscher 26 gelangt das Gas durch die Ringleitung 27 mit einer Temperatur von 550 °C zurück in die Desorptionszone 24.

In der zweiten Reduktionszone 35 werden pro Stunde 8 100 $Nm^3$ $H_2$ gebraucht, die in der Leitung 36 herangeführt werden. Dabei entsteht die gleiche Menge $H_2S$, die mit einer Temperatur von 500 °C in der

Leitung 15 zur ersten Reduktionszone 12 gelangt.

Zum Kühlen in der Kühlzone 41 wird Wasserstoff verwendet, der zum Teil im Kreislauf geführt und von dem ein Teilstrom in einer stündlichen Menge von 8 100 $Nm^3$ von der Leitung 42 abgezweigt und der Wasserstoffleitung 36 zugeführt wird. Der Wasserstoff in Leitung 42 hat eine Temperatur von 400 °C und der in der Leitung 43 eine Temperatur von etwa 50 °C. Pro Stunde werden 40 000 kg Aktivkohle auf dem Transportweg 51 zur Wiederverwendung in der Adsorptionszone 5 zurückgeführt.

Die verwendete Aktivkohle, eine zylindrische Formkohle mit 4 mm Durchmesser, hat folgende Spezifikation :

| | |
|---|---|
| Rütteldichte : | 380 g/l |
| Aschegehalt : | kleiner 8 Gew.% |
| BET-Oberfläche : | 1 250 $m^2/g$ |
| Hydrophobie-Quotient | 2,2 |

Benzolbeladung bei 20 °C und einer relativen Sättigung von 90 %: 48 Gew.% ; bei relativer Sättigung von 10 %: 42 Gew.%.

**Patentansprüche**

1. Verfahren zum Entfernen von $SO_2$ und $SO_3$ aus Sauerstoff und Wasserdampf enthaltendem Rauchgas, das man in einer Adsorptionszone über regenerierbare Aktivkohle leitet, auf der die Schwefeloxide als $H_2SO_4$ abgeschieden werden, und Regeneration der beladenen Aktivkohle, die mit schwefelhaltigem Reduktionsgas ($H_2S$ und/oder $CS_2$ und/oder COS) behandelt wird, wobei Elementarschwefel entsteht, aus dem mit Wasserstoff oder Kohlenwasserstoffen das schwefelhaltige Reduktionsgas gebildet und zur Regeneration verwandt wird, dadurch gekennzeichnet, daß man das Rauchgas mit einer Temperatur von etwa 50 bis 80 °C und einer relativen Wasserdampfsättigung von 35 bis 90 % in die Adsorptionszone leitet, zur Regeneration der beladenen Aktivkohle in einer ersten Reduktionszone mit im Kreislauf geführtem schwefelhaltigem Reduktionsgas bei Temperaturen von 120 bis 180 °C die entstandene Schwefelsäure vollständig in Elementarschwefel umwandelt, in einer Desorptionszone bei Temperaturen im Bereich von 300 bis 500 °C etwa 20 bis 30 % der Elementarschwefel-Beladung mit Inertgas entfernt und den entfernten Schwefel gewinnt, anschließend in einer zweiten Reduktionszone die restliche Elementarschwefel-Beladung der Aktivkohle mit Wasserstoff oder Kohlenwasserstoffen bei Temperaturen im Bereich von 400 bis 550 °C zum schwefelhaltigen Reduktionsgas umsetzt und das gebildete Reduktionsgas der ersten Reduktionszone zuführt, und daß man die Aktivkohle kühlt und in der Adsorptionszone wieder verwendet.

2. Verfahren nach Anspruch 1, dadurch gekennzeichnet, daß man das Rauchgas zum Einstellen der Temperatur und des Wasserdampf-Sättigungsgrades vor der Adsorptionszone durch einen Einspritzkühler leitet.

3. Verfahren nach Anspruch 1 oder 2, dadurch gekennzeichnet, daß man eine Aktivkohle mit einer BET-Oberfläche von mindestens 1000 $m^2/g$, einem Mikroporenvolumen von 0,5 bis 0,7 $cm^3/g$ und einem Makroporenvolumen von 0,45 bis 0,60 $cm^3/g$ verwendet.

4. Verfahren nach Anspruch 1 oder 3, dadurch gekennzeichnet, daß man eine Aktivkohle mit einem Hydrophobie-Quotienten von 1,5 bis 2,5 verwendet.

**Claims**

1. A process of removing $SO_2$ and $SO_3$ from flue gas which contains oxygen and water vapour and which is caused to flow in an adsorption zone in contact with regenerable activated carbon on which the sulphur oxides are deposited as $H_2SO_4$, and of regenerating the laden activated carbon, which is treated with a sulphur-containing reducing gas ($H_2S$ and/or $CS_2$ and/or COS) to form elementary sulphur, which is treated with hydrogen or hydrocarbons to form the sulphur-containing reducing gas used for the regeneration, characterized in that the flue gas is at a temperature from about 50 to 80° and has a relative water vapour saturation from 35 to 90% as it enters the adsorption zone, the resulting sulphuric acid is entirely converted to elementary sulfur at temperatures from 120 to 180°C in a first reducing zone by a treatment with recirculated sulphur-containg reducing gas to regenerate the laden activated carbon, about 20 to 30% of the elementary sulphurloading is removed at temperatures in the range from 300 to 500 °C in a desorption zone by a treatment with inert gas and the removed sulphur is recovered, the remaining elementary sulphur loading of the activated carbon is subsequently reacted at temperatures in the range from 400 to 550°C in a second reduction zone by a treatment with hydrogen or hydrocarbons to form the sulphur-containing reducing gas, the resulting reducing gas is fed to the first reduction zone, and the activated carbon is cooled and is re-used in the adsorption zone.

2. A process according to claim 1, characterized in that the flue gas is passed through a spray cooler in order to adjust the temperature and the degree of water vapour saturation of the flue gas before it

enters the adsorption zone.

3. A process according to claim 1 or 2, characterized in that an activated carbon is used which has a B.E.T. surface area of at least 1000 $m^2/g$, a micropore volume from 0.5 to 0.7 $cm^3/g$ and a macropore volume from 0.45 to 0.60 $cm^3/g$.

4. A process according to claim 1 or 3, characterized in that an activated carbon is used which has a hydrophobya quotient from 1.5 to 2.5.

**Revendications**

1. Procédé d'élimination de $SO_2$ et $SO_3$ de gaz de fumée, contenant de l'oxygène et de la vapeur d'eau et envoyé dans une zone d'adsorption sur du charbon actif régénérable sur lequel les oxydes de soufre se déposent sous forme de $H_2SO_4$, et de régénération du charbon actif chargé qui est traité par un gaz réducteur soufré ($H_2S$ et/ou $CS_2$ et/ou COS) avec formation de soufre élémentaire à partir duquel on forme avec de l'hydrogène ou des hydrocarbures le gaz réducteur soufré, que l'on utilise pour la régénération, caractérisé en ce qu'il consiste à envoyer le gaz de fumée à une température de 50 à 80°C environ, et sous une saturation relative de vapeur d'eau de 35 à 90 % dans la zone d'adsorption, à transformer entièrement en soufre élémentaire l'acide sulfurique formé dans une première zone de réduction par du gaz réducteur soufré circulant en circuit fermé en opérant à des températures de 120 à 180°C pour régénérer le charbon actif chargé, à éliminer de 20 à 30 % environ du soufre élémentaire dont s'est chargé le charbon actif par du gaz inerte dans une zone de désorption à des températures de l'ordre de 300 à 500°C et à recueillir le soufre éliminé, ensuite à transformer en gaz réducteur soufré le soufre élémentaire restant dont s'est chargé le charbon actif dans une seconde zone de réduction par de l'hydrogène ou par des hydrocarbures en opérant à des températures de l'ordre de 400 à 550°C et à envoyer le gaz réducteur formé à la première zone de réduction et à refroidir le charbon actif et à le réutiliser dans la zone d'adsorption.

2. Procédé suivant la revendication 1, caractérisé en ce qu'il consiste à envoyer le gaz de fumée dans un dispositif de refroidissement à injection pour régler la température et le degré de saturation de la vapeur d'eau en amont de la zone d'adsorption.

3. Procédé suivant la revendication 1 ou 2, caractérisé en ce qu'il consiste à utiliser un charbon actif ayant une surface BET d'au moins 1000 $m^2/g$, un volume de pores microscopiques de 0,5 à 0,7 $cm^3/g$, et un volume de pores macroscopiques de 0,45 à 0,60 $cm^3/g$.

4. Procédé suivant la revendication 1 ou 3, caractérisé en ce qu'il consiste à utiliser un charbon actif ayant un quotient d'hydrophobie de 1,5 à 2,5.

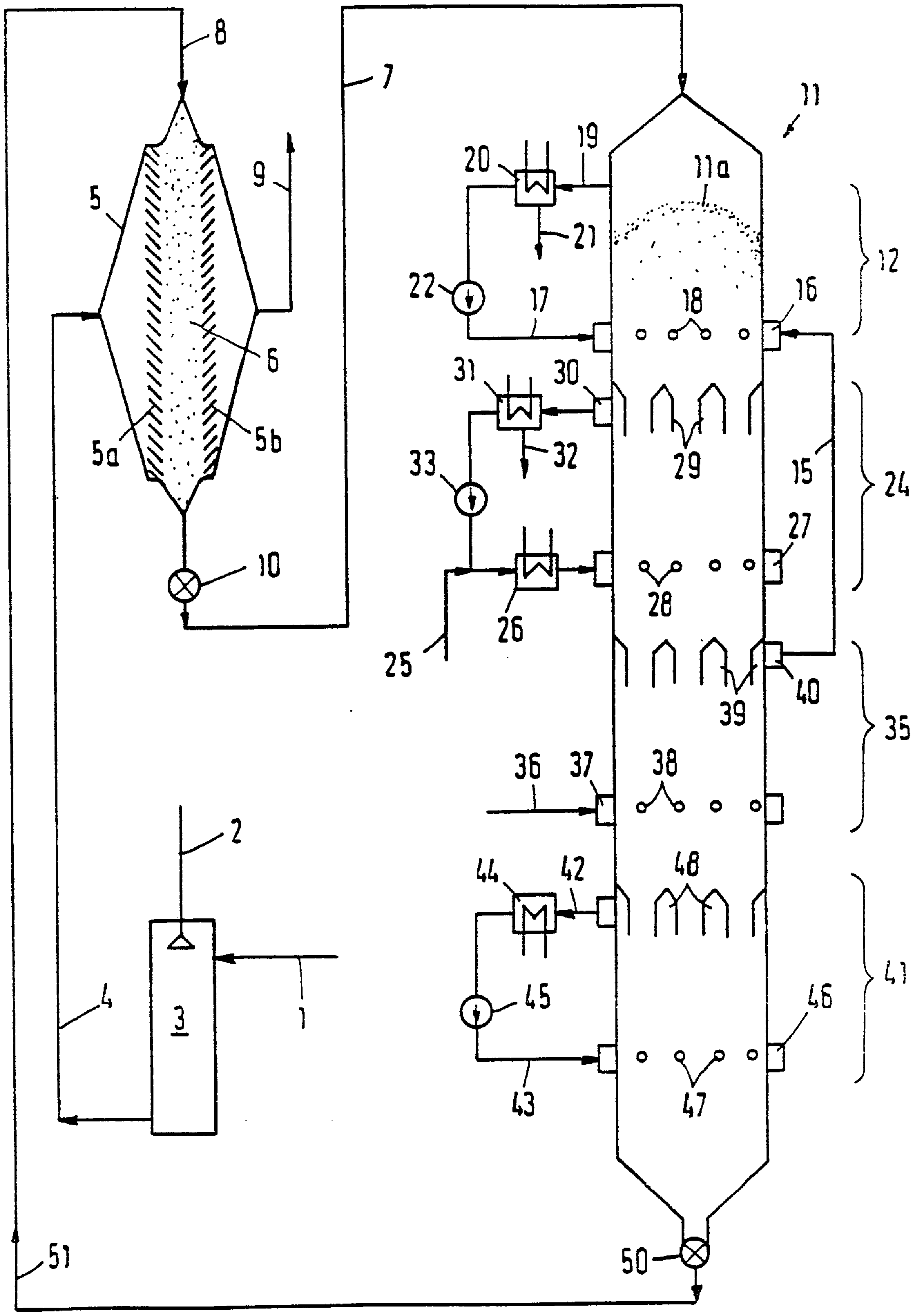
8
7
11
5
9
20
19
11a
12
21
22
17
18
16
6
31
30
5a
5b
32
29
15
24
33
27
10
28
26
25
39
40
35
36
37
38
2
44
42
48
1
4
3
45
46
41
43
47
51
50